# EUROPEAN PATENT SPECIFICATION

(11) **EP 1 462 234 B1**
(45) Date of publication and mention of the grant of the patent: **15.11.2006**
(21) Application number: 03007032.0
(22) Date of filing: 27.03.2003
(51) Int. Cl.: B29C 45/14, B32B 37/00, B41M 1/12

(54) **Auto screen-printing method for use in injection-molding**
Siebdruckverfahren zur Verwendung beim Spritzgießen
Procédé de sérigraphie et son utilisation dans le moulage par injection

(43) Date of publication of application: 29.09.2004
(73) Proprietor: TAIYI Precision Tech Corp., Taipei County (TW)
(72) Inventor: Huang, Jui Peng, Wu Ku Industry Park, Taipei County (TW)
(74) Representative: Viering, Jentschura & Partner

(56) References cited:
- EP-A- 1 125 764
- WO-A-00/51829
- US-A- 4 369 157
- US-A1- 2002 100 387

## Description

### BACKGROUND OF THE INVENTION

### Field of the Invention:

The present invention relates to a printing technology and, more particularly, to an auto screen-printing method for injection molding application.

### Description of the Related Art:

Conventional IMR printing methods include transfer-printing, spray-painting, electroplating, and direct injection molding. The transfer-printing method is not economic because it requires a long warm-up time and causes a big loss during printing. Further, this method cannot show an outstanding metal coloring. The electroplating method is expensive and has limitations on colors. The direct injection molding method is the most popularly accepted printing method. However, this method can only print one specific color at every injection molding process, not practical for printing a multi-color design. Document EP-A-1125764 discloses an auto screen-printing method according to the prior art.

### SUMMARY OF THE INVENTION

The present invention has been accomplished under the circumstances in view. It is one object of the present invention to provide an auto screen-printing method for use in injection molding, which eliminates the drawbacks of the prior art printing methods. It is another object of the present invention to provide an auto screen-printing method, which is practical for use injection molding. It is another object of the present invention to provide an auto screen-printing method, which is practical for multi-color printing. According to the present invention, the auto screen-printing method for use in injection molding comprises the steps of: (a) printing a layer of transparent hardening agent on a roll of PET material by means of an auto screen printing press and then drying the printing, (b) printing four different color mixtures of ink and hardening agent one after another on the dried transparent hardening agent by means of an auto screen printing press and drying the four color mixtures respectively after each color printing, (c) printing a layer of backing ink on the color mixtures of ink and hardening agent by means of an auto screen printing press and then drying the layer of backing ink, and (d) setting the printed roll of PET material thus obtained in an injection-molding machine for injection-molding with a plastic material into the desired finished product.

### BRIEF DESCRIPTION OF THE DRAWINGS

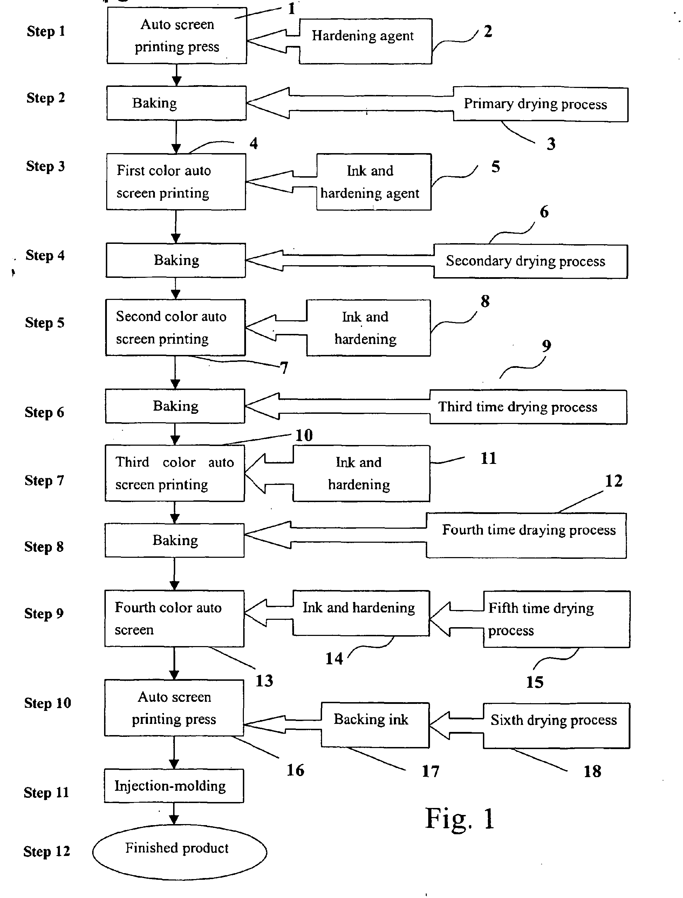

FIG. 1 is a block diagram explaining the operation flow of the auto screen-printing method according to the present invention.

### DETAILED DESCRIPTION OF THE PREFERRED EMBODIMENT

Referring to FIG. 1, the invention comprises the steps of 1 through 12.

The first step is to print a layer of transparent hardening agent **2** on a roll of PET material by means of an auto screen printing press **1**. The hardening agent **2** forms a layer of anti-scraping ink that protects the printing of the finished product against scraping.

The second step is the primary drying process **3** to dry the hardening agent **2** by baking at 80°C∼100°C for 2∼5 minutes.

The third step is the first color auto screen printing **4** to print a first color mixture of ink and hardening agent **5** on the dried hardening agent **2** by means of an auto screen printing press.

The fourth step is the secondary drying process **6** to dry the first color mixture of ink and hardening agent **5** by baking at 80°C∼100°C for 2∼5 minutes.

The fifth step is the second color auto screen printing **7** to print a second color mixture of ink and hardening agent **8** on the first color mixture of ink and hardening agent **5**.

The sixth step is the third time drying process **9** to dry the second color mixture of ink and hardening agent **8** by baking at 80°C∼100°C for 2∼5 minutes.

The seventh step is the third color auto screen printing **10** to print a third color mixture of ink and hardening agent **11** on the second color mixture of ink and hardening agent **8**.

The eighth step is the fourth time drying process **12** to dry the third color mixture of ink and hardening agent **11** by baking at 80°C∼100°C for 2∼5 minutes.

The ninth step is the fourth color auto screen printing **13** to print a layer of fourth color mixture of ink and hardening agent **14** on the third color mixture of ink and hardening agent **11** and then to dry the fourth color mixture of ink and hardening agent **14** through a fifth time drying process **15** by baking at 80°C∼100°C for 2∼5 minutes.

The tenth step is to print a layer of backing ink **17** on the layer of fourth color mixture of ink and hardening agent **14** by means of an auto screen printing press **16** and then to dry the layer of backing ink **17** through a sixth drying process **18** by baking at 80°C~100°C for 2∼5 minutes. The backing ink **17** is to enhance the brightness of the printing face and the bonding power of the printing face to plastic material during a further injection molding process.

The eleventh step is to set the printed roll of PET material thus obtained in an injection-molding machine for injection molding with a plastic material into the desired finished product.

Further, in the aforesaid steps, the colors of the four color mixtures are assigned by the customs and, the content of the hardening agent used in each mixture is within about 2∼8%.

A prototype of auto screen-printing method for use in injection-molding products has been constructed with the features of FIG. 1. The auto screen-printing method functions smoothly to provide all of the features discussed earlier.

## Claims

1. An auto screen-printing method for use in injection molding, comprising the steps of:
(a) printing a layer of transparent hardening agent (**2**) on a roll of PET material by means of an auto screen printing press (**1**) and then drying the printing;
(b) printing four different color mixtures of ink and hardening agent **(5,8,11,14)** one after another on the dried transparent hardening agent (**2**) by means of an auto screen printing press and drying the four color mixtures respectively after each color printing;
(c) printing a layer of backing ink (**17**) on said color mixtures of ink and hardening agent (**5,8,11,14**) by means of an auto screen printing press and then drying the layer of backing ink; and
(d) setting the printed roll of PET material thus obtained in an injection-molding machine for injection-molding with a plastic material into the desired finished product.

2. The auto screen-printing method as claimed in claim 1, wherein said transparent hardening agent (**2**) forms a layer of anti-scraping ink.

3. The auto screen-printing method as claimed in claim 1, wherein the drying process in each of steps (a)~(c) is to dry by baking.

4. The auto screen-printing method as claimed in claim 1, wherein the drying process in each of steps (a)~(c) is to dry by baking at 80°C~100°C.

5. The auto screen-printing method as claimed in claim 1, wherein the drying process in each of steps (a)~(c) is to dry by baking at 80°C~100°C for 2~5 minutes.

6. The auto screen-printing method as claimed in claim 1, wherein said step (b) printing four different color mixtures of ink and hardening agent is to print customer assigned four different color mixtures of ink and hardening agent one after another on the dried transparent hardening agent.

7. The auto screen-printing method as claimed in claim 1, wherein said backing ink (17) enhances the brightness of the printing face and the bonding power of the printing face to the plastic material during injection molding.

8. The auto screen-printing method as claimed in claim 1, wherein the content of hardening agent used in each of said four different color mixtures is within about 2~8%.

## Patentansprüche

1. Siebdruckverfahren zur Verwendung beim Spritzgießen, das die Schritte aufweist:
(a) Drucken einer Schicht aus durchsichtigem Härtungsmittel (2) auf eine Walze aus PET-Material mittels einer Siebdruckpresse (1) und dann Trocknen des Drucks;
(b) Drucken von vier verschiedenen Farbmischungen aus Druckfarbe und Härtungsmittel (5, 8, 11, 14) nacheinander auf das getrocknete durchsichtige Härtungsmittel (2) mittels der Siebdruckpresse und Trocknen der vier Farbmischungen jeweils nach jedem Farbdruck;
(c) Drucken einer Schicht aus Verstärkungsdruckfarbe (17) auf die Farbmischungen aus Druckfarbe und das Härtungsmittel (5, 8, 11, 14) mittels der Siebdruckpresse und dann Trocknen der Schicht aus Verstärkungsdruckfarbe; und
(d) Setzen der bedruckten Walze aus PET-Material in eine Spritzgießmaschine zum Spritzgiesen mit einem Kunststoffmaterial in das gewünschte Endprodukt.

2. Siebdruckverfahren gemäß Anspruch 1, wobei das durchsichtige Härtungsmittel (2) eine Schicht aus Antikratz-Druckfarbe bildet.

3. Siebdruckverfahren gemäß Anspruch 1, wobei der Trocknungsprozess in jedem der Schritte (a)~(c) ein Trocknen durch Einbrennen ist.

4. Siebdruckverfahren gemäß Anspruch 1, wobei der Trocknungsprozess in jedem der Schritte (a)~(c) ein Trocknen durch Einbrennen bei 80°C ~ 100°C ist.

5. Siebdruckverfahren gemäß Anspruch 1, wobei der Trocknungsprozess in jedem der Schritte (a)~(c) ein Trocknen durch Einbrennen bei 80°C ~ 100°C für 2~5 Minuten ist.

6. Siebdruckverfahren gemäß Anspruch 1, wobei der Schritt (b) des Druckens von vier verschiedenen Farbmischungen aus Druckfarbe und Härtungsmittel ein Drucken von vier verschiedenen kundenbestimmten Farbmischungen aus Druckfarbe und Härtungsmittel nacheinander auf das getrocknete durchsichtige Härtungsmittel ist.

7. Siebdruckverfahren gemäß Anspruch 1, wobei die Verstärkungsdruckfarbe (17) den Glanz der Druckoberfläche und die Bindekraft der Druckoberfläche zu dem Kunststoffmaterial während des Spritzgießens erhöht.

8. Siebdruckverfahren gemäß Anspruch 1, wobei der Gehalt des in jedem der vier verschiedenen Farbmischungen verwendeten Härtungsmittels etwa innerhalb 2~8% ist.

## Revendications

1. Procédé de sérigraphie automatique pour une utilisation dans un moulage par injection, comprenant les étapes consistant à :
(a) imprimer une couche d'un durcisseur transparent (2) sur un rouleau d'un matériau PET au moyen d'une presse de sérigraphie automatique (1) et sécher ensuite l'impression ;
(b) imprimer quatre mélanges différents de couleurs d'encre et d'un durcisseur (5, 8, 11, 14) l'un après l'autre sur le durcisseur transparent séché (2) au moyen d'une presse de sérigraphie automatique et sécher respectivement les quatre mélanges de couleurs après chaque impression de couleur ;
(c) imprimer une couche d'encre de renfort (17) sur lesdits mélanges de couleurs d'encre et de durcisseur (5, 8, 11, 14) au moyen d'une presse de sérigraphie automatique et sécher ensuite la couche d'encre de renfort, et
(d) fixer le rouleau imprimé du matériau PET ainsi obtenu dans une machine de moulage à injection pour un moulage à injection avec un matériau plastique pour obtenir le produit fini recherché.

2. Procédé de sérigraphie automatique selon la revendication 1, dans lequel ledit durcisseur transparent (2) forme une couche d'encre anti-grattage.

3. Procédé de sérigraphie automatique selon la revendication 1, dans lequel le procédé de séchage dans chaque étape (a) à (c) consiste à sécher par cuisson.

4. Procédé de sérigraphie automatique selon la revendication 1, dans lequel le procédé de séchage dans chaque étape (a) à (c) consiste à sécher par cuisson à une température comprise entre 80°C et 100°C.

5. Procédé de sérigraphie automatique selon la revendication 1, dans lequel le procédé de séchage dans chaque étape (a) à (c) consiste à sécher par cuisson à une température comprise entre 80°C et 100°C pendant 2 à 5 minutes.

6. Procédé de sérigraphie automatique selon la revendication 1, dans lequel ladite étape (b) d'impression des quatre mélanges différents de couleurs d'encre et de durcisseur consiste à imprimer les quatre mélanges de couleurs d'encre et de durcisseur choisis par le client l'un après l'autre sur le durcisseur transparent séché.

7. Procédé de sérigraphie automatique selon la revendication 1, dans lequel ladite encre de renfort (17) améliore la brillance de la face d'impression et la résistance du collage de la face d'impression au matériau plastique au cours du moulage par injection.

8. Procédé de sérigraphie automatique selon la revendication 1, dans lequel la teneur du durcisseur utilisé dans chacun desdits quatre différents mélanges de couleurs est comprise dans l'intervalle allant d'environ 2 à 8 %.
